# EUROPEAN PATENT APPLICATION

(11) **EP 2 546 965 A2**
(43) Date of publication of application: **16.01.2013**
(21) Application number: 12170926.5
(22) Date of filing: 06.06.2012
(51) Int. Cl.: H02K 53/00

(54) **Electric Power Generator Device**

(30) Priority: 11.07.2011 TW 100124447
(71) Applicant: Chang, Sheng-Chuang, Taipei City (TW); Chang, Feng-Chen, Keelung City (TW)
(72) Inventor: CHANG, Sheng-Chuang, Taipei City (TW)
(74) Representative: Viering, Jentschura & Partner

(57) **Abstract**

An electric power generator device includes: a dynamic force source device for generating a dynamic force driving a rotor of a generator to perform a rotary motion via moment transmission mechanism; the generator for generating an electric power, the generator including the rotor; the moment transmission mechanism disposed between the dynamic force source device and the rotor of the generator and adapted to lengthen a moment arm between a point of application of the dynamic force and the rotor, such that the moment arm thus lengthened allows the dynamic force transmission mechanism to impose a moment amplifying effect on the rotor, thereby driving in a labor-saving manner the rotor to perform the rotary motion.

## Description

### FIELD OF THE INVENTION

The present invention relates to generator devices, and more particularly, to an electric power generator device for enabling a generator to generate electric power efficiently.

### BACKGROUND OF THE INVENTION

US20110006533A1, entitled "Hydro Torque Electric Generator", discloses a hydro torque electric generator for producing electricity from flowing water. The devise has a drive shaft with paddles on the outer end which enter the flowing water causing the shaft to turn. This rotating motion is then transferred from the drive shaft to a flywheel shaft turning a large heavy flywheel on the shaft inner end. The flywheel then turns a power take off shaft connected to an electric generator producing electricity. This unique system uses three parallel shafts with connecting interlocking gears and disconnecting points on each shaft consisting of clutches and a transmission. To stored torque generated from the drive shaft a large heavy flywheel is used, which amplifies the rotational velocity. Once placed in flowing water, the devise generates electricity with an unique motion transfer system converting the linear motion of the flowing water to rotational motion.

### SUMMARY OF THE INVENTION

It is a primary objective of the present invention to provide an electric power generator device for enabling a generator to generate electric power efficiently.

In order to achieve the above and other objectives, the present invention provides an electric power generator device, comprising: a dynamic force source device for generating a dynamic force, the dynamic force driving a rotor of a generator to perform a rotary motion via a moment transmission mechanism; the generator for generating an electric power, the generator comprising the rotor; and the moment transmission mechanism disposed between the dynamic force source device and the rotor of the generator and adapted to lengthen a moment arm between a point of application of the dynamic force and the rotor, such that the moment arm thus lengthened allows the dynamic force transmission mechanism to impose a moment amplifying effect on the rotor, thereby driving in a labor-saving manner the rotor to perform the rotary motion.

### BRIEF DESCRIPTION OF THE DRAWINGS

To enable examiners to gain insight into the structure, features, and advantages of the present invention, the present invention is hereunder illustrated with preferred embodiments and accompanying drawings, wherein:
FIG. 1 is a structural block diagram of an electric power generator device of the present invention;
FIG. 2 is a schematic view of the illustration of the working principle of an amplifier for a force, using an example of implementation of a hydraulic system according to the present invention;
FIG. 3 is a structural schematic view of a moment transmission mechanism of the electric power generator device according to an embodiment of the present invention;
FIG. 4 is a structural schematic view of the moment transmission mechanism of the electric power generator device according to another embodiment of the present invention;
FIG. 5 is a schematic view of the electric power generator device according to a variant embodiment of the present invention; and
FIG. 6 is a schematic view of an example of application of the electric power generator device of the present invention to a vehicle.

### DETAILED DESCRIPTION OF THE INVENTION

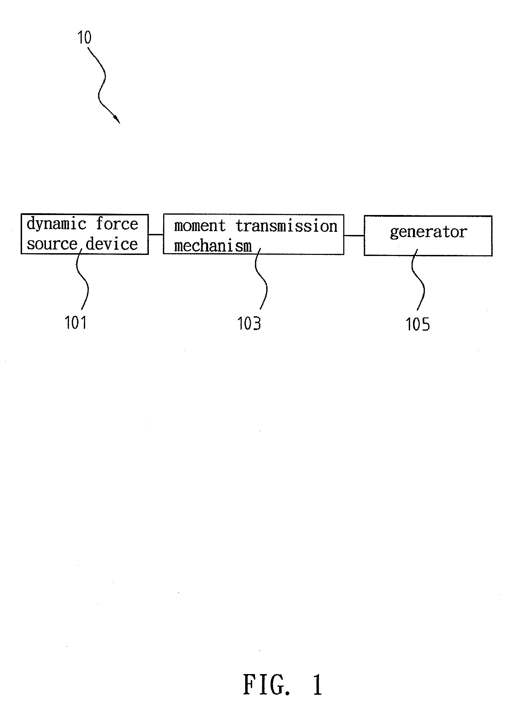

The contents and features of the present invention are hereunder illustrated with specific embodiments and the accompanying drawings. Referring to FIGs. 1, 3, 4, an electric power generator device 10 of the present invention comprises a dynamic force source device 101, a generator 103, and a moment transmission mechanism 105 as described hereunder.

An important feature of the electric power generator device 10 of the present invention lies in making good use of moment-related physical principles to allow the dynamic force source device 101 to drive in a labor-saving manner the rotation of a rotor 103a of the generator 103, such that the generator 103 can generate electric power.

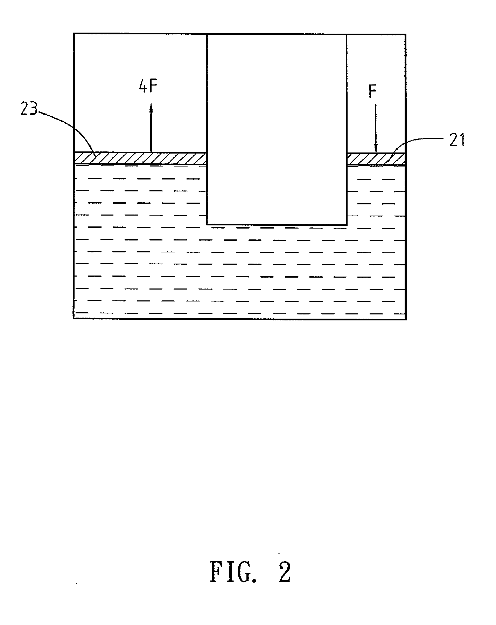

The electric power generator device 10 of the present invention can generate electric power efficiently, because the moment transmission mechanism 105 of the present invention functions as an amplifier for a force. An explanation of this phenomenon starts herein with Pascal's principle. Under Pascal's principle, a change in the pressure of a specific portion of a stationary fluid in a hermetically sealed container is transferred to the container wall that holds every portion of the fluid. Referring to FIG. 2 which depicts a hydraulic system, the exertion of a pressure F upon a piston 21 is accompanied by the generation of another pressure exerted upon another piston 23, wherein, for example, the cross-sectional area of the piston 23 is four times that of the piston 21, and thus the piston 23 is subjected to an amplified pressure 4F which is four times that of the pressure F exerted upon a piston 21. Hence, the hydraulic system of FIG. 2 functions as an amplifier for a force. Although the present invention differs from the hydraulic system of FIG. 2 in terms of physical principles, they have a purpose in common, that is, implementation of an amplifier for a force.

Referring to FIG. 1, the purpose of the dynamic force source device 101 is to generate a dynamic force, and the dynamic force thus generated is transmitted by the moment transmission mechanism 105 to drive the rotary motion of the rotor 103a of the generator 103. For example, in a specific embodiment, the dynamic force source device 101 is a conventional internal combustion engine, a conventional motor, or a conventional turbine. The conventional internal combustion engine (such as a vehicular engine) undergoes vaporization, ignition, and explosion of gasoline and thus translates a reciprocating motion (or switch-back) motion of a piston into a rotary motion of a crankshaft, such that the rotary motion brings about the dynamic force of the present invention. A conventional generator (such as a motor) is supplied with electric power from utility power or a storage battery so as to drive a rotary motion of a rotor of the conventional generator, such that the rotary motion brings about the dynamic force of the present invention. An axle of the conventional turbine is rotated by a passing fluid, and the rotating axle drives the rotor of the conventional generator to undergo a rotary motion, such that the rotary motion of the axle brings about the dynamic force of the present invention.

The purpose of the generator 103 is to generate electric power. In a specific embodiment of the present invention, the generator 103 is a conventional generator for use with a wind power generating windmill. In this regard, the conventional generator can be a multipolar synchronous generator disclosed in related prior art and designed to allow power generation to take place at a low rotational speed. In such a situation, a custom-made conventional generator with 50 to 100 poles or even more than 100 poles is required.

The moment transmission mechanism 105 is disposed between the dynamic force source device 101 and the rotor 103a of the generator 103. One of the purposes of the moment transmission mechanism 105 is to lengthen the moment arm between the point of application of the dynamic force (that is, the dynamic force generated by the dynamic force source device 101) and the rotor 103a, such that the moment arm thus lengthened allows the dynamic force transmission mechanism 101 to impose a moment effect on the rotor 103a, allowing the moment transmission mechanism 105 to function as an amplifier for a force and thereby driving in a labor-saving manner the rotor 103a to perform the rotary motion.

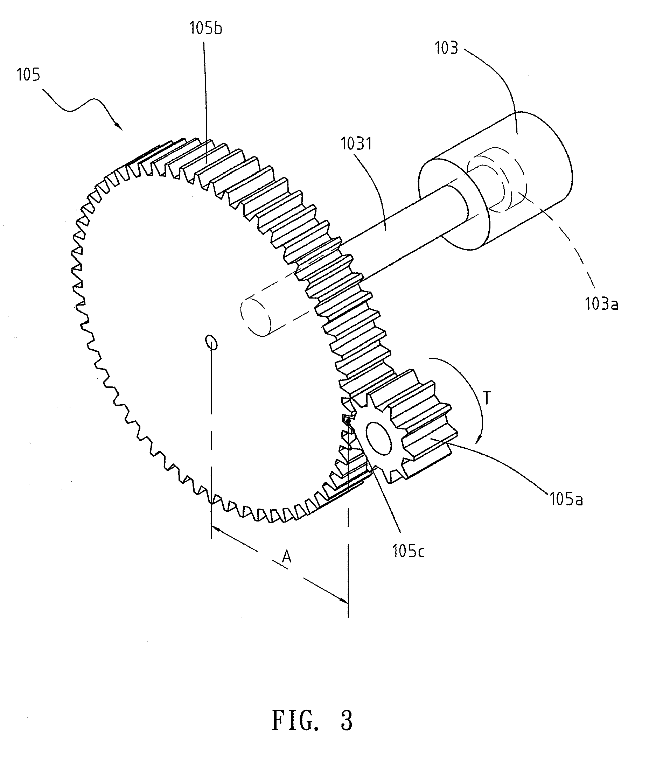

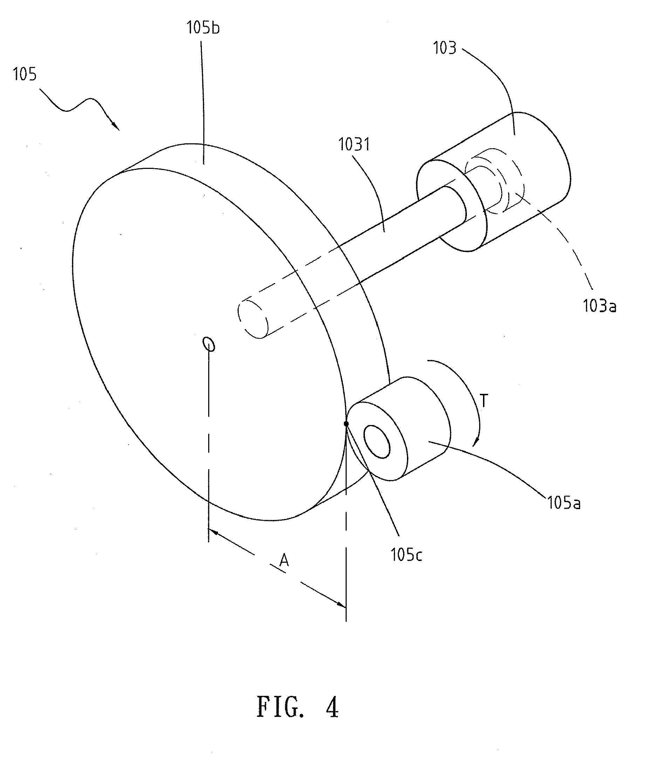

A specific embodiment of the present invention is put forth below in conjunction with FIGs. 3, 4 to describe how the moment transmission mechanism 105 imposes a moment effect on the rotor 103a of the generator 103.

Referring to FIG. 3, there is shown a structural schematic view of the moment transmission mechanism 105 according to an embodiment of the present invention. The moment transmission mechanism 105 comprises at least one gear 105a, 105b. The gears 105a, 105b are linked together. One of the gears 105a, 105b, for example, the gear 105b, is fixed to the rotor 103a. For example, the gear 105b is fixed to an axle 1031 of the rotor 103a.

The gear 105a performs a rotary motion under a dynamic force T generated by the dynamic force source device 101. The gear 105a and the gear 105b mesh and turn together to drive the axle 1031 to rotate; as a result, the rotor 103a rotates, thereby causing the generator 103 to generate electric power. Referring to FIG. 3, a point of application 105c of the dynamic force T and the center of the axle 1031 are separated by a distance A, and the distance A is equivalent to the lengthened moment arm; hence, the moment transmission mechanism 105 imposes a moment effect on the rotor 103a by means of the lengthened moment arm A.

Referring to FIG. 4, there is shown a structural schematic view of the moment transmission mechanism 105 according to another embodiment of the present invention. The moment transmission mechanism 105 comprises at least one frictional wheel 105'a, 105'b. The frictional wheels 105'a, 105'b are linked together. One of the frictional wheels 105'a, 105'b, for example, the frictional wheel 105'b, is fixed to the rotor 103a. For example, the frictional wheel 105'b is fixed to the axle 1031 of the rotor 103a.

The frictional wheel 105'a performs a rotary motion under the dynamic force T generated by the dynamic force source device 101. The frictional wheel 105'a and the frictional wheel 105'b mesh and turn together to drive the axle 1031 to rotate; as a result, the rotor 103a rotates, thereby causing the generator 103 to generate electric power. Referring to FIG. 4, the point of application 105c of the dynamic force T and the center of the axle 1031 are separated by a distance A, and the distance A is equivalent to the lengthened moment arm; hence, the moment transmission mechanism 105 imposes a moment effect on the rotor 103a by means of the lengthened moment arm A.

For example, both the gear 105b of FIG. 3 and the frictional wheel 105'b of FIG. 4 have a diameter of 1∼30 m(meters) approximately. The resultant moment effect increases with the diameter of the gear 105b or the frictional wheel 105'b.

The aforesaid two specific embodiments are not restrictive of the moment transmission mechanism 105 of the present invention. Any equivalent variant embodiment devised by persons skilled in the art without departing from the spirit embodied in the moment transmission mechanism 105 of the electric power generator device 10 of the present invention, for example, "a variant embodiment in which the moment transmission mechanism 105 comprises a chain, a deflecting bar, or a link for transmitting a dynamic force under which the rotor 103a rotates," should fall within the scope of the disclosure contained in the present invention.

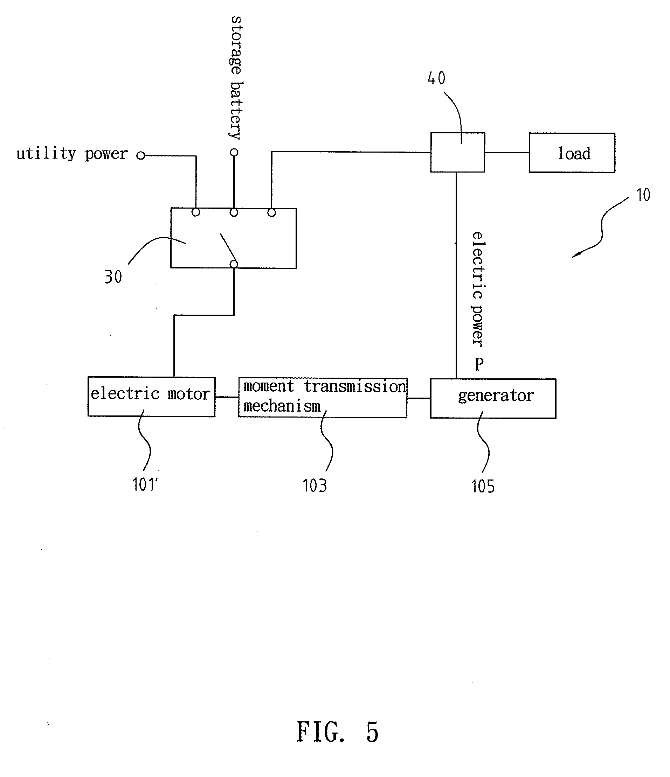

Referring to FIG. 5, there is shown a schematic view of the electric power generator device according to a variant embodiment of the present invention. Additional technical features recited in this variant embodiment include: the dynamic force source device 101 is an electric motor 101'; a portion of electric power generated by the generator 103 is supplied to the electric motor 101'; a power dividing device 40, such as a distributor, provides a distribution electric power P; the portion of the distribution electric power P is returned and supplied to the electric motor 101; and a switching switch 30 switches between electric power of utility power and electric power of a storage battery or returns the portion of electric power, wherein the purpose of the switching switch 30 is to select electric power to be supplied to the electric motor 101'.

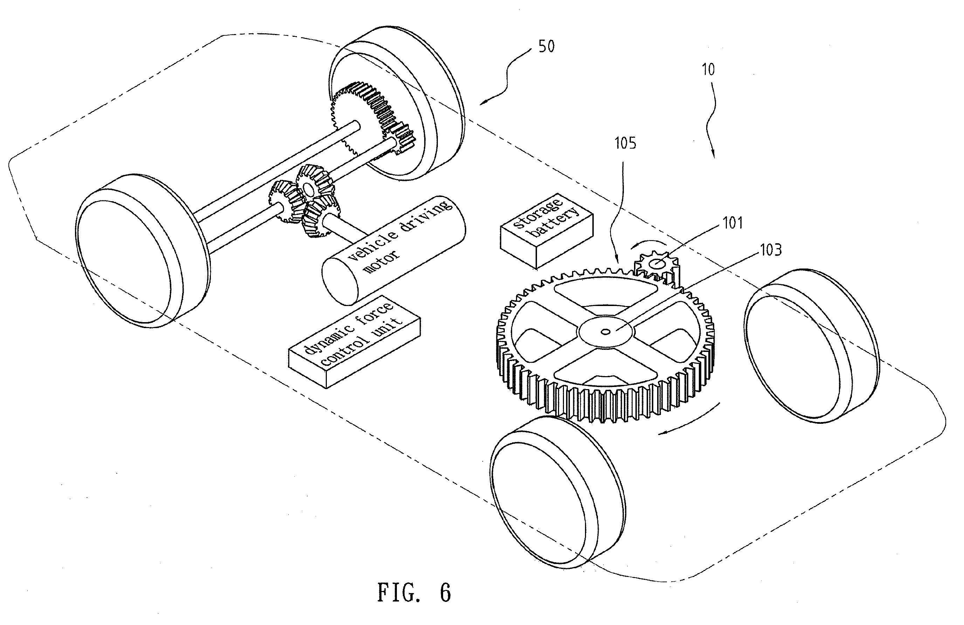

Referring to FIG. 6, there is shown a schematic view of an example of application of the electric power generator device of the present invention to a vehicle. Conventional electric vehicles (such as electric cars or electric buses) or hybrid electric vehicles use rechargeable batteries (such as lithium rechargeable batteries) or fuel cells as their electric power sources and thus are more environmentally friendly than petroleum-dependent vehicles. The electric power generator device 10 of the present invention is mounted on an electric vehicle 50, such as an electric car, an electric bus, an electric ship, or an electric rail car, to substitute for the aforesaid rechargeable batteries or fuel cells. The electric power generator device 10 mounted on the electric vehicle 50 supplies electric power to a vehicle driving motor and a dynamic force control unit. Furthermore, the electric power generator device 10 supplies a charging current to the storage battery. Also, the storage battery supplies electric power to the vehicle driving motor and the dynamic force control unit while the electric power generator device 10 is idle.

The electric power generator device of the present invention is not only equipped with a moment transmission mechanism that functions as an amplifier for a force but also characterized by integration of a dynamic force and a moment to thereby make good use of a dynamic force generated from a dynamic force source device and enable a generator to generate electric power efficiently -inventive steps disclosed by the present invention.

Hence, the present invention has novelty, non-obviousness, and industrial applicability and thereby meets the requirements of patentability for certain.

The present invention is disclosed above by preferred embodiments. However, persons skilled in the art should understand that the preferred embodiments are illustrative of the present invention only, but should not be interpreted as restrictive of the scope of the present invention. Hence, all equivalent variations and modifications made to the aforesaid embodiments in accordance with the disclosure contained in the claims and specification of the present invention should fall within the scope of the present invention.

## Claims

1. An electric power generator device, comprising:
a dynamic force source device for generating a dynamic force, the dynamic force driving a rotor of a generator to perform a rotary motion via a moment transmission mechanism;
the generator for generating an electric power, the generator comprising the rotor; and
the moment transmission mechanism disposed between the dynamic force source device and the rotor of the generator and adapted to lengthen a moment arm between a point of application of the dynamic force and the rotor, such that the moment arm thus lengthened allows the dynamic force transmission mechanism to impose a moment amplifying effect on the rotor, thereby driving in a labor-saving manner the rotor to perform the rotary motion.

2. The electric power generator device of claim 1, wherein the dynamic force source device is an internal combustion engine, an electric motor, or a turbine.

3. The electric power generator device of claim 1, wherein the rotor comprises an axle, wherein the dynamic force transmission mechanism imposes the moment amplifying effect on the axle via the moment arm thus lengthened, thereby driving in a labor-saving manner the axle to perform a rotary motion.

4. The electric power generator device of claim 1, wherein the moment transmission mechanism comprises at least one gear, the gears being linked together, and one of the gears is fixed to the rotor.

5. The electric power generator device of claim 1, wherein the moment transmission mechanism comprises at least one frictional wheel, the frictional wheels being linked together, and one of the frictional wheels is fixed to the rotor.

6. The electric power generator device of claim 2, wherein a portion of the electric power generated by the generator is supplied to the electric motor, such that the portion of electric power is returned and supplied to the electric motor.

7. An electric vehicle comprising the electric power generator device of claim 1.

8. The electric vehicle of claim 7, being one of an electric car, an electric bus, an electric ship, and an electric rail car.
